# EUROPEAN PATENT APPLICATION

(11) **EP 3 419 261 A1**
(43) Date of publication of application: **26.12.2018**
(21) Application number: 17177114.0
(22) Date of filing: 21.06.2017
(51) Int. Cl.: H04M 1/725, H04M 19/04

(54) **MOBILE PHONE AND SMARTWATCH INTERACTION**

(71) Applicant: Vestel Elektronik Sanayi ve Ticaret A.S., 45030 Manisa (TR)
(72) Inventor: ÖZBAY, Mustafa Caner, 45030 Manisa (TR)
(74) Representative: Ascherl, Andreas

(57) **Abstract**

The present invention refers to a method for selecting an output means dependent on the distance between paired devices. The method preferably comprises at least the steps: Providing at least a first electronic device (1) and a second electronic device (2), wherein the first electronic device (1) comprises an output means and wherein the second electronic device (2) comprises a further output means, wherein the first electronic device (1) is a master device and wherein the second electronic device (2) is a slave device to the master device, wherein the first electronic device (1) and the second electronic device (2) are connected by means of a data connection, receiving a notification with the first electronic device (1) and/or with the second electronic device (2), outputting an acoustic signal (3) by means of the master device, determining if the acoustic signal (3) is detected by means of the slave device, displaying the content of the notification on a display means of the master device in case the slave device detected the acoustic signal (3).

## Description

The present invention refers according to claims 1 and 2 to methods for selecting an output means, according to claim 14 to a computer program product and according to claim 15 to a system.

### Background of the Invention

Smartwatches and smartphones are well known products, which are generally interconnected via a data connection. Thus, data received on a smartphone is directly displayed on both devices.

Document US2014/139454A1 discloses a wearable computing device that includes one or more sensors, one or more processors, and a memory coupled to the processors that includes instructions executable by the processors. When executing the instructions, the processors detect, by one or more of the sensors of the wearable computing device when worn on a limb of a user, a gesture-recognition-activation event associated with the wearable computing device; detect, by one or more sensors of the wearable computing device when worn on the limb of the user, a movement of the limb; determine a gesture made by the user based at least in part on the movement; and process the gesture as input to the computing wearable computing device.

It is already possible to limit transferring notifications to the smartwatch. Such feature can be generally set up in a phone menu. Thus, user can allow or block any application notification from menu but it does not evaluate if the user saw the notification on phone screen or not. And it does not judge if there is no need to show same notification on both devices.

In case such two devices are close together, the indication of the incoming notification at both devices is problematic both in terms of power consumption and distraction.

Thus, it is the object of the present invention to provide an alternative method and system that avoids at least one of such problems.

### Description of the Invention

The before mentioned object is solved by a method for selecting an output means according to claim 1. The method according to the present invention preferably comprises at least the steps: Providing at least a first electronic device and a second electronic device, wherein the first electronic device comprises an output means and wherein the second electronic device comprises a further output means, wherein the first electronic device is a master device and wherein the second electronic device is a slave device. That means the first electronic device is preferably registered as master device and the second electronic device or any further electronic device, like a third or fourth or tenth electronic device, is registered as a slave device. The first electronic device and the second electronic device are connected by means of a data connection. That means data can be exchanged via that data connection, but that data connection does not need to be constantly established. Receiving a notification with the first electronic device and/or with the second electronic device, outputting an acoustic signal by means of the master device, in particular immediately after receiving of said notification or within a predefined time, determining if the acoustic signal is detected by means of the slave device, displaying the content of the notification on a display means of the master device in case the slave device detected the acoustic signal. Alternatively, the step of outputting an acoustic signal can define outputting by means of the slave device, determining if the acoustic signal is detected by means of the master device, displaying the content of the notification on a display means of the slave device in case the master device detected the acoustic signal. The predefined time is preferably less than 120 seconds, in particular less than 60 seconds or less than 10 seconds or less than 2 seconds, after receipt of said notification. Thus, displaying the content of the notification is preferably limited to one device, in case the acoustic signal was detected by the slave device respectively master device. The data connection is preferably a direct connection, like a Bluetooth connection, or an indirect connection, like a WLAN or GSM connection. The term output means preferably describes an optical output means, in particularly a screen respectively display.

This solution is beneficial since due to the step of detecting the acoustic signal it can be easily determined that the electronic device outputting the acoustic signal and the other electronic device detecting said acoustic signal are arranged in close distance to each other. Thus, the user has access to both devices, since they are close to each other. Outputting the notification via just one electronic device reduces power consumption on the other electronic device. Furthermore, the user is not distracted by multiple electronic devices outputting notifications at the same time.

It is additionally or alternatively possible that the acoustic signal is outputted by means of the electronic device which is used more frequently and/or actually and/or which has more energy respectively which remaining operation time (in terms of power consumption) lasts longer. Thus, data about usage and power level of said connected devices is preferably shared via the data connection. This embodiment or solution is beneficial since an enhanced energy management is possible. In case the user already interacts with one device, then there is no need to display the notification with both devices or with the other device. Thus, the other device does not need to display the notification and therefore saves energy. In case the user does not interact with any of said devices it is beneficial to output the notification with the device with the longest remaining operation time.

Further preferred embodiment are subject-matters of the following specification parts and/or of the dependent claims.

According to a preferred embodiment of the present invention the acoustic signal is detected by means of a microphone. This embodiment is beneficial since most electronic devices are comprising microphones, thus there is no need to modify the hardware of such devices.

The data connection connects according to a further preferred embodiment of the present invention the master device and the slave device via an internet connection. This embodiment is beneficial since both devices can be controlled by a cloud server and/or both devices can receive data, in particular notification data, via a cloud service. Thus, in case said electronic devices are not arranged in close distance to each other each electronic device still can receive data, in particular notifications. Thus, the master device and the slave device are preferably connected to the same cloud based service.

Sound identification data is according to a further preferred embodiment of the present invention exchanged between the master device and the slave device via the data connection, wherein the sound identification data identifies the acoustic signal for matching the detected acoustic signal with the identification data. It is also possible that the identification data is stored on a server means and the receiving device temporally, in particularly in predefined time intervals, receives said identification data or the server means sends updated identification data to the receiving device in case the identification data was modified. The identification data preferably also comprises data about the volume of the output means outputting the acoustic signal.

According to a further preferred embodiment of the present invention the method comprises the step of determining if a user checks the notification on said device and displaying the content of the notification with another device, in particularly the slave device, after a predefined event, in particular time limit or actuation, in case the user did not check the notification on said device. Thus, in case the user did not check said device which was elected to display the content of said data the notification is outputted via the other electronic device, in particularly the other electronic device is actuated or moved.

The step of determining if a user checks the notification comprises according to a further preferred embodiment of the present invention detecting a user interaction with said device and detecting if the content of the notification was displayed during said interaction or in a predefined time span after the interaction.

According to a further embodiment of the present invention the method further comprises the steps of moving the slave device, detecting the movements of the slave device, in particularly by sensors of said slave device, and displaying the content of the notification on the display means of the slave device, in particularly in case the detected movements fit to predefined movements. This embodiment is beneficial since the notifications can be blocked respectively not displayed on the slave device in case the movements are identifying a movement pattern that is considered as "not disturb pattern", like the movements which are present during driving a car or running. Additionally or alternatively movement patterns which are identifying "disturb pattern" are causing outputting of the notification via the slave device. "Disturb pattern" can be e.g. movement patterns present during walking or desk work.

The predefined movements are stored according to a further preferred embodiment of the present invention in movement data on the master device and/or slave device and/or cloud server. The master device is preferably a smart phone and the slave device is preferably a smart watch or vice versa. Furthermore, it is alternatively possible that further electronic devices are connected to the master device and/or slave device. Additionally, the master device might by any of smartphone, smartwatch, tablet pc, smart googles, laptop, etc.

The present invention further refers to a computer program product for executing a method according to any of the preceding claims.

The above mentioned object is further solved by a system for distribution of data and for displaying content represented by said data according to claim 15. Said system preferably comprises at least an electronic device which is registered as master device and a further electronic device which is registered as slave device, wherein the data is distributed and/or the content is displayed in dependency of a predefined distance between the master device and the slave device, in case the master device and the slave device are within the predefined distance the content is displayed by means of a display means of the master device and in case the master device and the slave device are not within the predefined distance the content is displayed by means of a display means of the slave device, wherein the distance between the slave device and the master device is determined by outputting a predefined acoustic signal with one of said devices and by detecting said acoustic signal with the other device, in case the acoustic signal can be detected it is preferably deemed that the devices are arranged in a distance below or equal to the predefined distance, in case the acoustic signal cannot be detected it is preferably deemed that the devices are arranged in a distance above the predefined distance.

Further benefits, goals and features of the present invention will be described by the following specification of the attached figure, in which exemplarily components of the invention are illustrated. Components of the device and methods according to the invention, which match at least essentially with respect to their function can be marked with the same reference sign, wherein such components do not have to be marked or described multiple times with respect to said figure. In the following the invention is just exemplarily described with respect to the attached figure.

### Brief Description of the Drawings

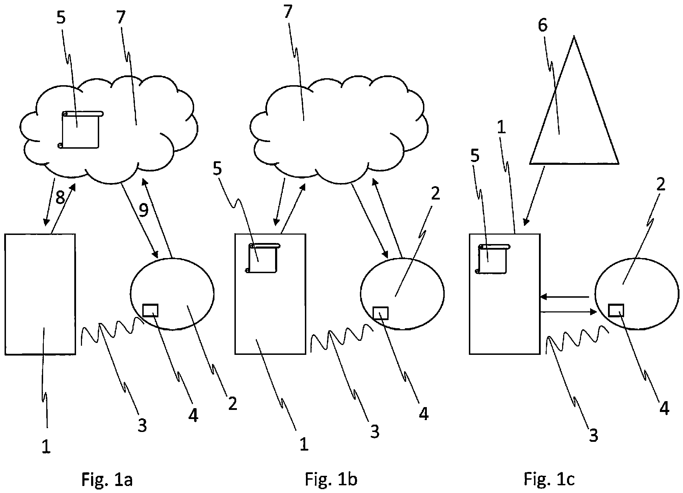

- Fig. 1a: schematically illustrates a first setting of the present invention;
- Fig. 1b: schematically illustrates a second setting of the present invention and
- Fig. 1c: schematically illustrates a third setting of the present invention.

### Detailed Description of the Drawings

Fig. 1a shows a first electronic device 1, in particularly a smartphone, and a second electronic device 2, in particularly a smartwatch. Reference number 7 indicates a server means, in particularly a cloud server or cloud service. Server 7 comprises control data 5. Said control data 5 identifies one of the electronic devices 1, 2 as master unit, in particularly electronic device 1, and one as slave unit, in particularly electronic device 2. Both, the first electronic device 1 and the second electronic device 2 are configured to exchange data with server means 7. In case server means 7 receives data to be transferred to the user, the server means 7 sends said data preferably to the master device 1. Master device 1 preferably outputs an acoustic signal 3 indicating receipt of data representing a notification. The acoustic signal 3 is detected by microphone 4 of slave device 2, in case slave device 2 is in close distance to the master unit 1. Identification data indicating that the acoustic signal 3 is used for checking presence of the slave device 2 within close distance to the master device 1 is transferred from master device 1 directly, in particularly via Bluetooth, or indirectly, in particularly via WLAN or GSM, to slave device 2. It is additionally or alternatively possible that the identification data is part of the control data 5. Slave device 2 preferably sends confirmation data to server means 7 or directly to master device 1 in case the acoustic signal 3 was detected. Reference number 8 indicates data exchange between server means 7 and master device 1 and reference number 9 indicates data exchange between server means 7 and slave device 1. Further slave devices (not shown) can be connected to said system.

Fig. 1b shows an alternative setting. According to this setting the control data 5 is stored and/or controlled by master device 1. The other features are preferably similar or identical with the setting of fig. 1 a.

Fig. 1c shows a further alternative setting.

According to this embodiment a data and/or signal source 6, in particularly a head end, provides notification data to the master device 1. Master device 1 preferably stores and/or controls control data 5. The master device 1 and the slave device 2 are preferably directly connected, in particularly by means of a wireless connection, in particularly a Bluetooth connection.

Thus, at least two devices 1, 2 are located in close proximity to each other and may interact with each other. One of these devices 1 connects as master, the other or the others as slave 2. The indication of the incoming notification at both devices may be dangerous both in terms of power consumption and distraction. To prevent these and similar situations, the notification is sent only to the master device 1 and, if so desired, to the slave devices 2. The master device 1 informs the user by sound when a notification is received. The melody which will be played will be sent to the other devices 2 from the beginning by the master device 1. The same sound is also received by nearby slave devices 2. These devices 2 take the sound through the microphones 4 on them. With this incoming sound, it is assumed that the master device 1 is nearby and that the user will first check the notification from this device 1.

In this case some other scenarios can be achieved. If the user does not check in a certain time, the notification is sent to other slave devices 2 such as smart watch. Or, if the user is unable to access the phone (master device 1) for security reasons, the notification will be sent to the watch under certain circumstances. These certain circumstances can be the movements taught to the smart watch 2. Thus, when the user repeats these movements with smart watch 2, the notification will appear on the screen of the smartwatch.

Therefore, the present method for selecting an output means out of multiple output means of at least one first electronic device and one second electronic device comprises preferably at least the steps: Providing at least a first electronic device 1 and a second electronic device 2, wherein the first electronic device 1 comprises an output means and wherein the second electronic device 2 comprises a further output means, wherein the first electronic device 1 is a master device and wherein the second electronic device 2 is a slave device, wherein the first electronic device 1 and the second electronic device 2 are connected by means of a data connection, receiving a notification with the first electronic device 1 and/or with the second electronic device 2, outputting an acoustic signal 3 by means of the master device, determining if the acoustic signal 3 is detected by means of the slave device, displaying the content of the notification on a display means of the master device in case the slave device detected the acoustic signal 3.

### List of reference numbers

- 1: first electronic means (master device)
- 2: second electronic means (slave device)
- 3: acoustic signal
- 4: microphone
- 5: control data
- 6: data and/or signal source
- 7: server means
- 8: data exchange between master device and server means
- 9: data exchange between slave means and server means

## Claims

1. Method for selecting an output means,
at least comprising the steps:
Providing at least a first electronic device (1) and a second electronic device (2),
wherein the first electronic device (1) comprises an output means and wherein the second electronic device (2) comprises a further output means,
wherein the first electronic device (1) is a master device and
wherein the second electronic device (2) is a slave device,
wherein the first electronic device (1) and the second electronic device (2) are connected by means of a data connection,
Receiving a notification with the first electronic device (1) and/or with the second electronic device (2);
Outputting an acoustic signal (3) by means of the master device,
Determining if the acoustic signal (3) is detected by means of the slave device,
Displaying the content of the notification on a display means of the master device in case the slave device detected the acoustic signal (3).

2. Method for selecting an output means,
at least comprising the steps:
Providing at least a first electronic device (1) and a second electronic device (2),
wherein the first electronic device (1) comprises an output means and wherein the second electronic device (2) comprises a further output means,
wherein the first electronic device (1) is a master device and
wherein the second electronic device (2) is a slave device,
wherein the first electronic device (1) and the second electronic device (2) are connected by means of a data connection,
Receiving a notification with the first electronic device and/or with the second electronic device,
Outputting an acoustic signal (3) by means of the slave device,
Determining if the acoustic signal (3) is detected by means of the master device,
Displaying the content of the notification on a display means of the slave device in case the master device detected the acoustic signal (3).

3. Method according to claim 1 or 2,
**characterized in that**,
the acoustic signal (3) is detected by means of a microphone (4).

4. Method according to any of the preceding claims,
**characterized in that**,
the data connection connects the master device and the slave device via an internet connection.

5. Method according to claim 4,
**characterized in that**,
sound identification data is exchanged between the master device and the slave device via the data connection, wherein the sound identification data identifies the acoustic signal for matching the detected acoustic signal with the identification data.

6. Method according to claim 5,
**characterized in that**,
displaying of the content of the notification is limited to one device, in case the acoustic signal (3) was detected by the slave device respectively master device.

7. Method according to any of the preceding claims,
**characterized by**
determining if a user checks the notification on said device (1) and
displaying the content of the notification with another device (2), in particularly the slave device, after a predefined time limit in case the user did not check the notification on said device (1).

8. Method according to claim 7,
**characterized in that**,
the step of determining if a user checks the notification comprises detecting a user interaction with said device and detecting if the content of the notification was displayed during said interaction or in a predefined time span after the interaction.

9. Method according to any of the preceding claims,
**characterized by**
moving the slave device,
detecting the movements of the slave device,
displaying the content of the notification on the display means of the slave device in case the detected movements fit to predefined movements.

10. Method according to claim 9,
**characterized in that**,
the predefined movements are stored in movement data on the master device and/or slave device and/or cloud server.

11. Method according to any of the preceding claims,
**characterized in that**
the master device is a smart phone and the slave device is a smart watch.

12. Method according to any of the preceding claims,
**characterized in that**
the master device and the slave device are connected to the same cloud based service.

13. Method according to any of the preceding claims,
**characterized in that**
the data connection is a Bluetooth connection or WLAN or GSM connection.

14. Computer program product for executing a method according to any of the preceding claims.

15. System for distribution of data and for displaying content represented by said data,
at least comprising
an electronic device (1) which is registered as master device and a further electronic device (2) which is registered as slave device, wherein the data is distributed and/or the content is displayed in dependency of a predefined distance between the master device and the slave device,
in case the master device and the slave device are within the predefined distance the content is displayed by means of a display means of the master device and
in case the master device and the slave device are not within the predefined distance the content is displayed by means of a display means of the slave device,
wherein the distance between the slave device and the master device is determined by outputting a predefined acoustic signal (3) with one of said devices (1) and by detecting said acoustic signal (3) with the other device (2), in case the acoustic signal (3) can be detected the devices (1, 2) are arranged in a distance below or equal to the predefined distance, in case the acoustic signal (3) cannot be detected the devices (1, 2) are arranged in a distance above the predefined distance.
